# EUROPEAN PATENT APPLICATION

(11) **EP 4 730 168 A1**
(43) Date of publication of application: **22.04.2026**
(21) Application number: 25209408.1
(22) Date of filing: 17.10.2025
(51) Int. Cl.: G06F 21/31, G06F 21/35, G06F 21/45, G06Q 20/34, G06Q 20/38, H04W 4/80, H04W 12/06

(54) **CONFIGURATION OF A TEMPORARY INSTRUMENT**

(30) Priority: 21.10.2024 US 202418921506
(71) Applicant: American Express Travel Related Services Co., Inc., New York, NY 10285-4900 (US); American Express Services Europe Limited, London SW1W 9AX (GB)
(72) Inventor: SELVARAJAH, Dhillon, London, SW1W 9AX (GB); BURHAN, Aimen Rasheed, Burgess Hill, RH15 9AQ (GB); EBY, Alaric M., New York, 10285 (US)
(74) Representative: Reddie & Grose LLP

(57) **Abstract**

Disclosed are various approaches for configuring and issuing a temporary instrument derivative to a primary account. A computing device can be configured to receive a request to designate a temporary user for a primary instrument (129), where the request identifying temporary user data (136). Next, the computing device can determine one or more provisioning rules (123) for a temporary instrument (119) based at least in part on the request and send an authentication request (133) to the temporary user based at least in part on the temporary user data (136). After receiving an authentication response based at least in part on the authentication request, the computing device can issue the temporary instrument (119) to the temporary user.

## Description

### CROSS-REFERENCE TO RELATED APPLICATIONS

This application claims priority to, and the benefit of, co-pending U.S. Patent Application No. 18/921,506, entitled "CONFIGURATION OF A TEMPORARY INSTRUMENT" and filed on October 21, 2024, which is incorporated by reference as if set forth herein in its entirety.

### BACKGROUND

There are often circumstances where a primary account holder with an institution wishes to grant access to his or her account to another individual on a temporary and limited basis. However, current approaches are limited to merely adding an additional user to the account, and do not allow for temporary and limited use of the account.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a network environment according to various embodiments of the present disclosure.
FIG. 2 is a flowchart illustrating one example of functionality implemented as portions of a temporary instrument application executed in a computing environment in the network environment of FIG. 1 according to various embodiments of the present disclosure.
FIG. 3 is a flowchart that provides a detailed example of the operation of a configuration portion of the temporary instrument application from FIG. 2 according to various embodiments of the present disclosure.
FIG. 4 is a flowchart that provides a detailed example of the operation of an authentication portion of the temporary instrument application from FIG. 2 according to various embodiments of the present disclosure.
FIG. 5 is a flowchart that provides an alternative detailed example of the operation of the authentication portion of the temporary instrument application from FIG. 2 according to various embodiments of the present disclosure.
FIG. 6 is a flowchart that provides an alternative detailed example of the operation of the authentication portion of the temporary instrument application from FIG. 2 according to various embodiments of the present disclosure.
FIG. 7 is a flowchart that provides one example of the operation of a deactivation portion of the temporary instrument application executed in a computing environment in the network environment of FIG. 1 according to various embodiments of the present disclosure.
FIG. 8 is a flowchart that provides an alternative example of the operation of a deactivation portion of the temporary instrument application executed in a computing environment in the network environment of FIG. 1 according to various embodiments of the present disclosure.
FIGS. 9 and 10 are diagrams illustrating examples of user interactions according to various embodiments of the present disclosure.

### DETAILED DESCRIPTION

Disclosed are various approaches for configuring and issuing a temporary instrument derivative to a primary account. Often, a primary account holder with an institution wishes to grant access to his or her account to another individual on a temporary and limited basis. For example, a cardholder with a financial institution may wish to grant their child temporary and/or limited access to their card without providing the child a physical card and without adding the child as a full-access user of the account. In another example, a rewards account holder may wish to grant temporary and/or limited access to their awards account to a friend who would benefit from use of the awards. A primary account holder may not wish to grant full access to their accounts, even though they wish to share the benefits.

In these circumstances, when there is a limited window during which a temporary user would benefit from access to the primary account, it would not be practical to waste valuable time from that limited window to complete a lengthy application and issuing process in order to add the temporary account member. Current processes do not provide for instant provisioning or automatic deactivation of a new member's access to the primary account. Instead, current processes include filling out lengthy applications, waiting for institution approval, and in some cases, waiting for a physical card to be sent to the additional user. Accordingly, various embodiments of the present disclosure provide for a system and method of instant provisioning and issuing of a temporary instrument which provides limited access to the primary account. By obtaining the limitations from the primary account holder, the temporary instrument can be automatically configured, issued, and revoked or deactivated with minimal effort by the primary account holder and minimal risk to an institution associated with the account. Thus, the primary account holder can maintain control of their account while sharing the benefits with another user on a limited basis.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principles disclosed by the following illustrative examples.

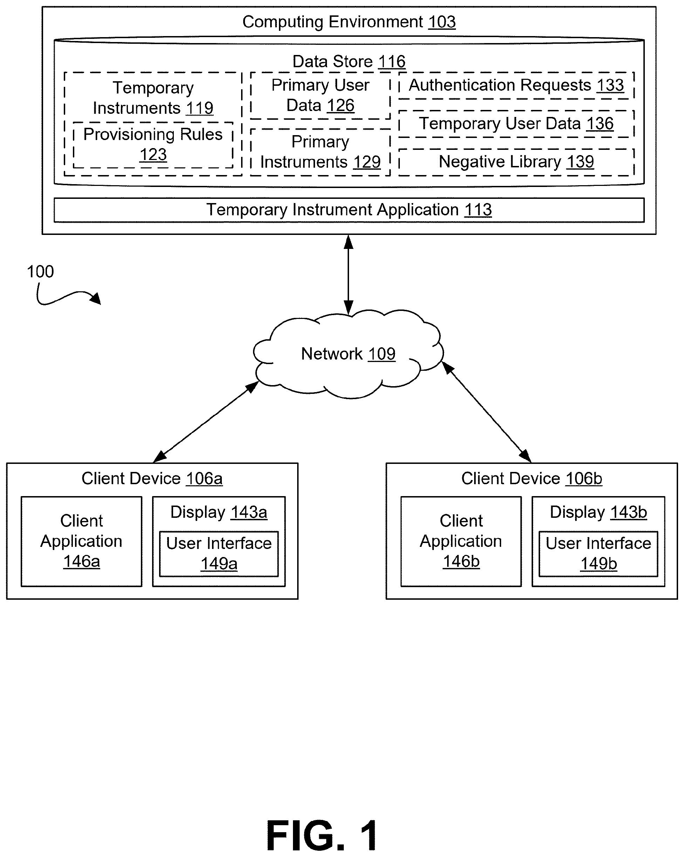

With reference to FIG. 1, shown is a network environment 100 according to various embodiments. The network environment 100 can include a computing environment 103 and one or more client devices 106 *(e.g.,* 106a, 106b) which can be in data communication with each other via a network 109.

The network 109 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (*i.e.,* WI-FI^{®}), BLUETOOTH^{®} networks, microwave transmission networks, as well as other networks relying on radio broadcasts. The network 109 can also include a combination of two or more networks 109. Examples of networks 109 can include the Internet, intranets, extranets, virtual private networks (VPNs), and similar networks.

The computing environment 103 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 103 can employ a plurality of computing devices that can be arranged in one or more server banks or computer banks or other arrangements. Such computing devices can be located in a single installation or can be distributed among many different geographical locations. For example, the computing environment 103 can include a plurality of computing devices that together can include a hosted computing resource, a grid computing resource or any other distributed computing arrangement. In some cases, the computing environment 103 can correspond to an elastic computing resource where the allotted capacity of processing, network, storage, or other computing-related resources can vary over time.

Various applications or other functionality can be executed in the computing environment 103. The components executed on the computing environment 103 include a temporary instrument application 113, and other applications, services, processes, systems, engines, or functionality not discussed in detail herein.

The temporary instrument application 113 can be executed to facilitate the generation and configuration of a temporary instrument. The temporary instrument application 113 can manage the temporary instrument from initial set-up to the eventual deactivation of the instrument. In some examples, the temporary instrument application 113 can receive a request to designate a temporary user for an instrument, receive provisioning rules for the temporary use, and generate a temporary instrument according to the provisioning rules. Further, in some examples, the temporary instrument application 113 can authenticate the temporary user and issue the temporary instrument. In some examples, the temporary instrument application 113 can deactivate the temporary instrument as well.

Also, various data is stored in a data store 116 that is accessible to the computing environment 103. The data store 116 can be representative of a plurality of data stores 116, which can include relational databases or non-relational databases such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the data store 116 is associated with the operation of the various applications or functional entities described below. This data can include temporary instruments 119 having provisioning rules 123, primary user data 126, primary instruments 129, authentication requests 133, temporary user data 136, a negative library 139, and potentially other data.

The temporary instruments 119 can represent a temporary and configurable payment instrument associated with a primary instrument 129. In some examples, the temporary instrument 119 can be a digital or electronic payment instrument such as a digital gift card, a digital credit or debit card, a digital wallet, or other mechanism of payment. Each temporary instrument 119 can be associated with one or more provisioning rules 123.

The provisioning rules 123 can represent one or more limitations set by the primary user of the associated primary instrument 129. In some embodiments, one provisioning rule 123 can set a duration of the availability of temporary instrument 119, such as an activation time and date as well as a deactivation time and date. In some examples, a provisioning rules 123 can set a usage limit on the temporary instrument 119, such as a maximum credit or debit amount. The one or more provisioning rules 123 can include rules regarding the time, place, amount, merchant, device, wallet, or other limitation on the usage of the temporary instrument 119.

The primary user data 126 can represent data about the primary user of the primary instrument 129. The primary user data 126 can include account information associated with the primary instrument 129, user information such as name, address, devices, *etc.,* and potentially other information. In some examples, the primary user data 126 can include credit risk information, a list of contacts, spend history, or other information.

Primary instruments 129 can be representative of a payment instrument associated with a primary user. In some examples, the primary instrument 129 can be a digital or electronic payment instrument such as a digital gift card, a digital credit or debit card, a digital wallet, or other mechanism of payment. The primary user can initiate the journey described herein by requesting to add a temporary user to the primary user's primary instrument 129. For example, the primary user can be an account-holder with a financial institution and can request a temporary user be added to their account. The primary instrument 129 in this example could be a credit or debit card associated with the primary user's account. In another example, the primary instrument 129 can be a payment service account (*e.g.,* PayPal^{®}, VENMO^{®}, CASH APP, Zelle^{®}, *etc.*) associated with the primary user.

The authentication requests 133 can represent various forms of messages or content generated by the temporary instrument application 113 for use in authenticating a temporary user. In some examples, an authentication request 133 can comprise a barcode such as a linear barcode, a matrix barcode, or other barcode. When scanned by a temporary user, the barcode can comprise an authentication request 133. In another example, the authentication request 133 can comprise a temporary short-range wireless message for sharing via near-field communication, ultrawideband (UWB) technology, BLUETOOTH, or other short-range wireless communication. The authentication request 133 can be sent to the temporary user over the appropriate channel. In another example, the authentication request 133 can be an authentication link which can be shared with the temporary user.

The temporary user data 136 can represent data about the temporary user designated by the primary user. The temporary user data 136 can include contact information, personal information *(e.g.,* name, address, devices, *etc.),* identification numbers, and potentially other information. In some examples, the temporary user data 136 can include credit risk information, engagement history, whether the temporary user holds their own primary instrument 129, or other information.

The negative library 139 can represent a database or library of bad actors, flagged accounts, high risk profiles, and other information which indicates a risk for issuing a temporary instrument 119. In some examples, the negative library 139 can include information associated with previous risk incidents.

The client devices 106 are representative of a plurality of client devices (*e.g.,* 106a, 106b, *etc*.) that can be coupled to the network 109. In some examples, one client device 106a is associated with the primary user and another client device 106b is associated with a temporary user. Each client device 106 can include a processor-based system such as a computer system. Such a computer system can be embodied in the form of a personal computer (*e.g.,* a desktop computer, a laptop computer, or similar device), a mobile computing device (*e.g.,* personal digital assistants, cellular telephones, smartphones, web pads, tablet computer systems, music players, portable game consoles, electronic book readers, and similar devices), media playback devices (*e.g.,* media streaming devices, BluRay^{®} players, digital video disc (DVD) players, set-top boxes, and similar devices), a videogame console, or other devices with like capability. Each client device 106 can include one or more displays 143 (*e.g.,* 143a, 143b, *etc.),* such as liquid crystal displays (LCDs), gas plasma-based flat panel displays, organic light emitting diode (OLED) displays, electrophoretic ink ("E-ink") displays, projectors, or other types of display devices. In some instances, the display 143 can be a component of the client device 106 or can be connected to the client device 106 through a wired or wireless connection.

Each client device 106 can be configured to execute various applications such as client applications 146a, 146b or other applications. Each client application 146 can be executed in a client device 106 to access network content served up by the computing environment 103 or other servers, thereby rendering a user interface 149 *(e.g.,* 149a, 149b) on the display 143. To this end, the client application 146 can include a browser, a dedicated application, or other executable, and the user interface 149 can include a network page, an application screen, or other user mechanism for obtaining user input. The client device 106 can be configured to execute applications beyond the client application 146 such as email applications, social networking applications, word processors, spreadsheets, or other applications.

Next, a general description of the operation of the various components of the network environment 100 is provided. To begin, a primary user holding a primary instrument 129 may wish to designate an additional temporary user for their primary instrument 129. The primary user can request to add a temporary user to the account associated with the primary instrument 129. As a result of such a request, a temporary instrument 119 can be generated and configured by the primary user to provide to the temporary user.

To configure the temporary instrument 119, a primary user can provide one or more provisioning rules 123 which can serve to limit the uses of the temporary instrument 119. For example, the primary user can limit a total amount of credit that the temporary instrument 119 can access, a time period during which the temporary instrument 119 is active, a location or merchant where the temporary instrument 119 can be used, or various other limitations. In some instances, the primary user can fill out a form including these provisioning rules 123 after submitting their request to add a temporary user.

Before issuing the temporary instrument 119 to the temporary user, a temporary instrument application 113 can first determine whether the temporary user is a trusted user. The temporary instrument application 113 can cross-check temporary user data against a negative library 139 to determine whether the temporary user is associated with any known negative events. Once the temporary user has been verified, the temporary instrument 119 can be configured.

Configuring the temporary instrument 119 can comprise the steps of determining the one or more provisioning rules 123, generating a temporary instrument 119, and applying the provisioning rules 123 to the temporary instrument 119. After configuration, the temporary instrument application 113 can authenticate the temporary user. In some examples, authentication can include sending an authentication request 133 and receiving an authentication response. There are numerous ways to accomplish authentication. Some examples include generating a barcode *(e.g.,* linear barcode, matrix code, *etc.)* and presenting the code to the temporary user to scan; generating a temporary short-range wireless message to transmit to a device of the temporary user; and generating and sending an authentication link to the temporary user. The temporary user can engage with the authentication request 133 and send an authentication response.

After authentication, the temporary instrument application 113 can issue the temporary instrument 119. In some examples, the configured temporary instrument 119 can be automatically and immediately sent to a digital wallet of the temporary user. Similarly, the configured temporary instrument 119 can be automatically and immediately deactivated based at least in part on a request from the primary user, or an expiration date in the provisioning rules 123.

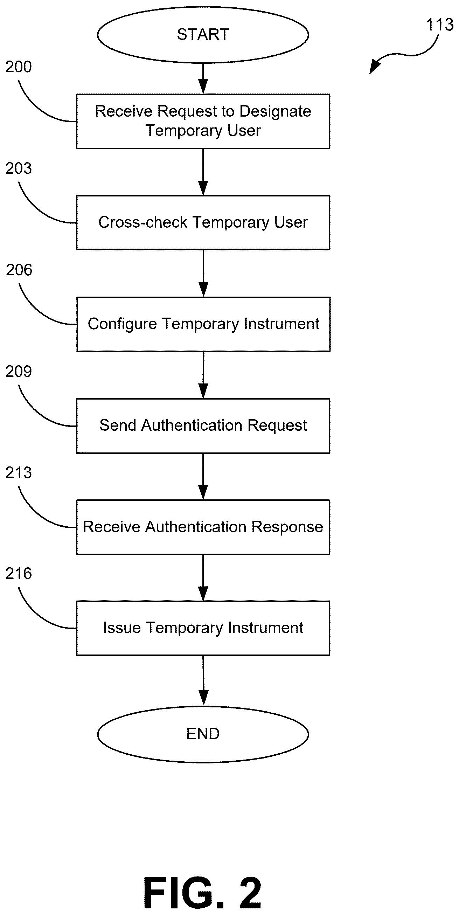

Referring next to FIG. 2, shown is a flowchart that provides one example of the operation of a portion of the temporary instrument application 113. The flowchart of FIG. 2 provides merely an example of the many different types of functional arrangements that can be employed to implement the operation of the depicted portion of the temporary instrument application 113. As an alternative, the flowchart of FIG. 2 can be viewed as depicting an example of elements of a method implemented within the network environment 100.

Beginning with block 200, the temporary instrument application 113 can be executed to receive a request to designate a temporary user. In some embodiments, the temporary instrument application 113 can receive a request from a client device 106 associated with a primary user *(e.g.,* a primary client device 106a). The request can represent a message, a notification, an alert, or another communication. In some examples, the request to designate a temporary user includes temporary user data 136 and/or primary user data 126. In some examples, the request can include one or more provisioning rules 123.

Next, at block 203, the temporary instrument application 113 can be executed to cross-check the temporary user. The temporary instrument application 113 can identify a temporary user based at least in part on the request received at block 203 and cross-check the temporary user against a negative library 139. According to various examples, the temporary instrument application 113 can cross-check the temporary user data 136 against a negative library 139 in order to determine whether the temporary user poses a risk. In some examples, the cross-check results in the identification of risk associated with the temporary user data 136, and the temporary instrument application 113 can deny the request from block 200. In some examples, the cross-check does not result in the identification of any risks associated with the temporary user data 136, and the temporary instrument application 113 can proceed to block 206.

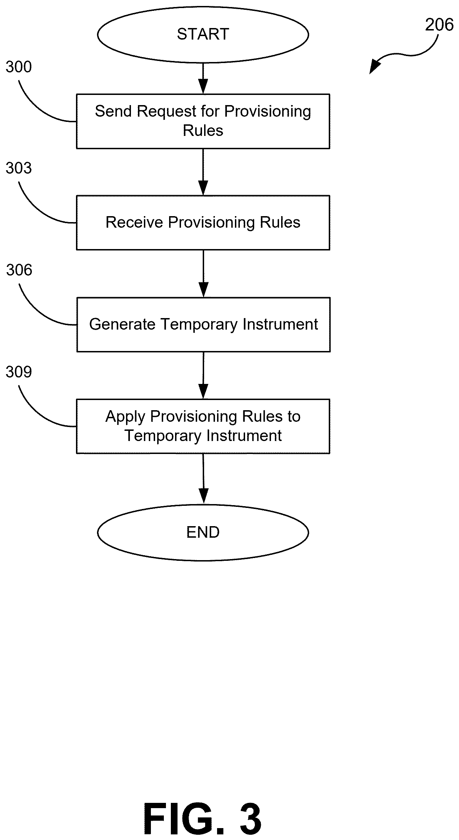

At block 206, the temporary instrument application 113 can be executed to configure a temporary instrument 119. According to various embodiments, the temporary instrument application 113 can determine one or more provisioning rules 123 for a temporary instrument 119 based at least in part on the request received at block 200. The temporary instrument application 113 can generate a temporary instrument 119 based at least in part on the primary instrument 129 and the one or more provisioning rules 123. In some embodiments, the temporary instrument application 113 can apply the one or more provisioning rules 123 to the temporary instrument 119. Further detail about the configuration of the temporary instrument 119 can be found in the discussion of FIG. 3.

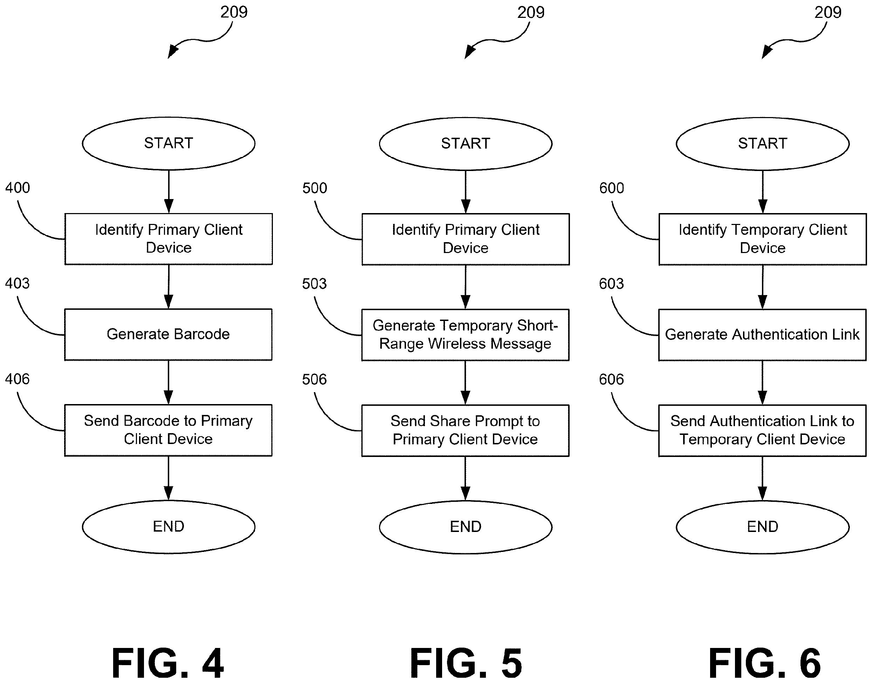

At block 209, the temporary instrument application 113 can be executed to send an authentication request 133. According to various examples, the temporary instrument application 113 can use one or more of several different approaches to send an authentication request 133. In some examples, the temporary instrument application can generate a message to be sent to the temporary user's client device 106b. For example, the temporary instrument application 113 can generate a barcode, a link, or a short-range wireless message to be shared between a primary user and a temporary user. In some examples, the temporary instrument application 113 can send the authentication request 133 directly to the temporary user's client device 106b. However, in other examples, the temporary instrument application 113 can send the authentication request 133 to the primary user's client device 106a to be shared with the temporary user. Further detail of how an authentication request 133 can be generated and sent by the temporary instrument application 113 is found in the discussion of FIGS. 4-6.

At block 213, the temporary instrument application 113 can be executed to receive an authentication response. In some examples, the temporary instrument application 113 can receive an authentication response from a client device 106 based at least in part on the authentication request 133 sent at block 209. The temporary instrument application 113 can receive the authentication response from a primary user's client device 106a or a temporary user's client device 106b. In some examples, the authentication response can verify the identity of the temporary user. However, in some examples, the authentication response could fail to verify the identity of the temporary user.

Next, at block 216, the temporary instrument application 113 can be executed to issue the temporary instrument 119. In some examples, the temporary instrument application 113 can issue the temporary instrument 119 in response to a positive authentication response received at block 213. The temporary instrument application 113 can issue the temporary instrument 119 by sending the temporary instrument 119 to a client device 106 associated with the temporary user. In some examples, the temporary instrument application 113 can issue the temporary instrument 119 to a digital wallet associated with the temporary user. After block 216, the flowchart of FIG. 2 comes to an end.

Moving to FIG. 3, shown is a flowchart that provides one example of the operation of a portion of the temporary instrument application 113. Specifically, FIG. 3 shows an example of a detailed breakdown of block 206 from FIG. 2. The flowchart of FIG. 3 provides merely an example of the many different types of functional arrangements that can be employed to implement the operation of the depicted portion of the temporary instrument application 113. As an alternative, the flowchart of FIG. 3 can be viewed as depicting an example of elements of a method implemented within the network environment 100.

At block 300, the temporary instrument application 113 can be executed to send a request for provisioning rules 123. The request can comprise a prompt to submit one or more provisioning rules 123, a form for the primary user to fill out, or another message to the primary user requesting one or more provisioning rules 123. In some examples, the temporary instrument application 113 can identify the primary user based at least in part on the request received at block 200 of FIG. 2 and send a request for provisioning rules 123 to the primary user. In some examples, the temporary instrument application 113 can send the request for provisioning rules 123 based at least in part on the request to designate a temporary user.

Next, at block 303, the temporary instrument application 113 can be executed to receive provisioning rules 123. In some examples, the temporary instrument application 113 can receive the one or more provisioning rules 123 from a primary user's client device 106a. The one or more provisioning rules 123 can be received based at least in part on the request sent at block 300.

At block 306, the temporary instrument application 113 can be executed to generate a temporary instrument 119. The temporary instrument application 113 can create a temporary instrument 119 based at least in part on the primary instrument 129. By treating the primary instrument 129 as a "parent" account, the temporary instrument application 113 can generate a "child" account for the temporary instrument 119. In some examples, the temporary instrument 119 is generated based at least in part on the one or more provisioning rules 123 received at block 303. In some examples, the temporary instrument 119 is generated based at least in part on temporary user data 136.

Next, at block 309, the temporary instrument application 113 can be executed to apply the provisioning rules 123 to the temporary instrument 119. In some examples, the temporary instrument application 113 can use the one or more provisioning rules 123 received at block 303 to configure the temporary instrument 119 generated at block 306. The temporary instrument application 113 can impose limitations on the usage of the temporary instrument 119 based at least in part on the one or more provisioning rules 123. After block 309, the flowchart of FIG. 3 comes to an end.

Next at FIG. 4, shown is a flowchart that provides one example of the operation of a portion of the temporary instrument application 113. Specifically, FIG. 4 shows an example of a detailed breakdown of block 209 from FIG. 2. The flowchart of FIG. 4 provides merely an example of the many different types of functional arrangements that can be employed to implement the operation of the depicted portion of the temporary instrument application 113. As an alternative, the flowchart of FIG. 4 can be viewed as depicting an example of elements of a method implemented within the network environment 100.

Beginning with block 400, the temporary instrument application 113 can be executed to identify a primary client device 106a. The temporary instrument application 113 can identify a client device 106a associated with the primary user based at least in part on primary user data 126. In some examples, the temporary instrument application 113 identifies the primary client device 106a based at least in part on the request to designate a temporary user at block 200 of FIG. 2. For example, the temporary instrument application 113 can identify the primary client device 106a based at least in part on metadata associated with the request or based at least in part on primary user data 126 included in the request.

Next, at block 403, the temporary instrument application 113 can be executed to generate a barcode. In some examples, the temporary instrument application 113 can generate an authentication request 133 in the form of a scannable barcode *(e.g.,* a linear barcode, a matrix barcode, *etc.).* The barcode can contain various information related to the authentication request 133 as well as to primary user data 126, temporary user data 136, or other data.

At block 406, the temporary instrument application 113 can be executed to send the barcode to the primary client device 106a. After generating the barcode at block 403, the temporary instrument application 113 can send the barcode to the primary client device 106a identified at block 400. In some examples, the temporary instrument application 113 can send the barcode to the primary client device 106a along with a prompt to present the barcode to the temporary user for scanning purposes. After block 406, the flowchart of FIG. 4 comes to an end.

Referring next to FIG. 5, shown is a flowchart that provides one example of the operation of a portion of the temporary instrument application 113. Specifically, FIG. 5 shows an example of a detailed breakdown of block 209 from FIG. 2. The flowchart of FIG. 5 provides merely an example of the many different types of functional arrangements that can be employed to implement the operation of the depicted portion of the temporary instrument application 113. As an alternative, the flowchart of FIG. 5 can be viewed as depicting an example of elements of a method implemented within the network environment 100.

Beginning with block 500, the temporary instrument application 113 can be executed to identify a primary client device 106a. The temporary instrument application 113 can identify a client device 106a associated with the primary user based at least in part on primary user data 126. In some examples, the temporary instrument application 113 identifies the primary client device 106a based at least in part on the request to designate a temporary user at block 200 of FIG. 2. For example, the temporary instrument application 113 can identify the primary client device 106a based at least in part on metadata associated with the request or based at least in part on primary user data 126 included in the request.

Next, at block 503, the temporary instrument application 113 can be executed to generate a temporary short-range wireless message. In some embodiments, the temporary short-range wireless message represents an authentication request 133. The temporary short-range wireless message can be generated for sharing via a BLUETOOTH, UWB, NFC, or another short-range wireless framework.

At block 506, the temporary instrument application 113 can be executed to send a share prompt to the primary client device 106a. In some embodiments, the temporary instrument application 113 can generate a prompt or message which alerts a primary user to share the temporary short-range wireless message generated at block 503. In some examples, the share prompt comprises an instruction to complete a device-to-device tap in order to transfer the temporary short-range wireless message. In another example, the share prompt comprises an instruction to share the short-range wireless message via a BLUETOOTH connection or a UWB connection. The temporary instrument application 113 can send the prompt to the primary client device 106a identified at block 500. After block 506, the flowchart of FIG. 5 comes to an end.

Next at FIG. 6, shown is a flowchart that provides one example of the operation of a portion of the temporary instrument application 113. Specifically, FIG. 6 shows an example of a detailed breakdown of block 209 from FIG. 2. The flowchart of FIG. 6 provides merely an example of the many different types of functional arrangements that can be employed to implement the operation of the depicted portion of the temporary instrument application 113. As an alternative, the flowchart of FIG. 6 can be viewed as depicting an example of elements of a method implemented within the network environment 100.

Beginning with block 600, the temporary instrument application 113 can be executed to identify a temporary client device 106b. The temporary instrument application 113 can identify a client device 106b associated with the temporary user based at least in part on temporary user data 136. In some examples, the temporary instrument application 113 identifies the temporary client device 106b based at least in part on the request to designate a temporary user at block 200 of FIG. 2. For example, the temporary instrument application 113 can identify the temporary client device 106b based at least in part on metadata associated with the request or based at least in part on temporary user data 136 included in the request.

Next, at block 603, the temporary instrument application 113 can be executed to generate an authentication link. The temporary instrument application 113 can generate an authentication request 133 in the form of an authentication link. The link can direct a user to a webpage or an application where the user can verify their identity or otherwise complete an authentication process.

At block 606, the temporary instrument application 113 can be executed to send the authentication link to the temporary client device 106b. The temporary instrument application 113 can send the authentication link generate at block 603 to the client device 106b of the temporary user identified at block 600. In some examples, the temporary instrument application 113 can send the authentication link with a message containing instructions to open the link for authentication purposes. After block 606, the flowchart of FIG. 6 comes to an end.

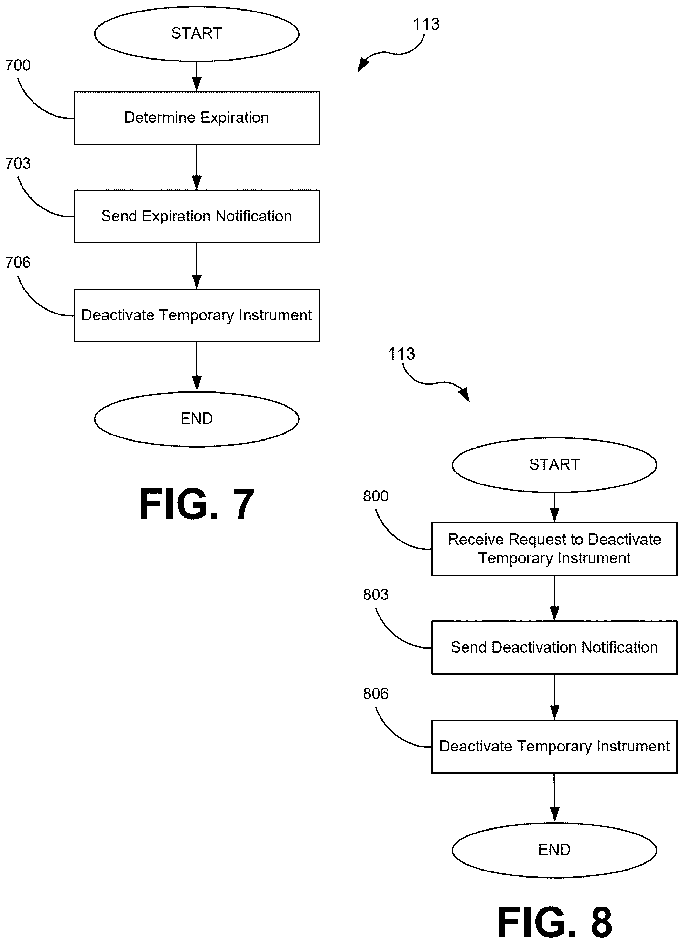

Next, at FIG. 7, shown is a flowchart that provides one example of the operation of a portion of the temporary instrument application 113. The flowchart of FIG. 7 provides merely an example of the many different types of functional arrangements that can be employed to implement the operation of the depicted portion of the temporary instrument application 113. As an alternative, the flowchart of FIG. 7 can be viewed as depicting an example of elements of a method implemented within the network environment 100.

Beginning with block 700, the temporary instrument application 113 can be executed to determine an expiration. The expiration can represent a date and/or time when the temporary instrument 119 will expire or deactivate. The temporary instrument application 113 can determine an expiration date for the temporary instrument 119 based at least in part on one or more provisioning rules 123. In some examples, the temporary instrument application 113 can determine an expiration date for the temporary instrument 119 based at least in part on the configuration of the temporary instrument 119.

At block 703, the temporary instrument application 113 can be executed to send an expiration notification. In some examples, the temporary instrument application 113 can send an expiration notification to a client device 106 associated with a primary user or with a temporary user. The expiration notification can comprise a message, notification, or alert which includes the expiration date of the temporary instrument 119 determined at block 700. In some examples, the expiration notification includes an option to reactivate or to request to reactivate the temporary instrument 119.

At block 706, the temporary instrument application 113 can be executed to deactivate the temporary instrument 119. In some examples, the temporary instrument application 113 can deactivate the temporary instrument 119 once the expiration determined at block 700 occurs. For example, if the expiration determined at block 700 was for June 7^{th}, the temporary instrument application 113 can deactivate the temporary instrument 119 upon the arrival of June 7^{th}. After block 706, the flowchart of FIG. 7 comes to an end.

Moving to FIG. 8, shown is a flowchart that provides one example of the operation of a portion of the temporary instrument application 113. The flowchart of FIG. 8 provides merely an example of the many different types of functional arrangements that can be employed to implement the operation of the depicted portion of the temporary instrument application 113. As an alternative, the flowchart of FIG. 8 can be viewed as depicting an example of elements of a method implemented within the network environment 100.

Beginning with block 800, the temporary instrument application 113 can be executed to receive a request to deactivate the temporary instrument 119. The temporary instrument application 113 can receive a request to deactivate the temporary instrument 119 from a primary user's client device 106a. In some examples, the temporary instrument application 113 can receive a request to deactivate the temporary instrument 119 from a managing institution. The request to deactivate the temporary instrument 119 can include a deactivation date as well as various other data such as temporary user data 136.

At block 803, the temporary instrument application 113 can be executed to send a deactivation notification. In some examples, the temporary instrument application 113 can send a deactivation notification to a client device 106 associated with the temporary user. The deactivation notification can comprise a message, notification, or alert which includes the deactivation date and/or time of the temporary instrument 119 or other information associated with the request to deactivate from block 800.

At block 806, the temporary instrument application 113 can be executed to deactivate the temporary instrument 119. In some examples, the temporary instrument application 113 can deactivate the temporary instrument 119 once the deactivation notification has been sent at block 803. In some examples, the temporary instrument application 113 can deactivate the temporary instrument 119 in response to receiving the request to deactivate at block 800. After block 806, the flowchart of FIG. 8 comes to an end.

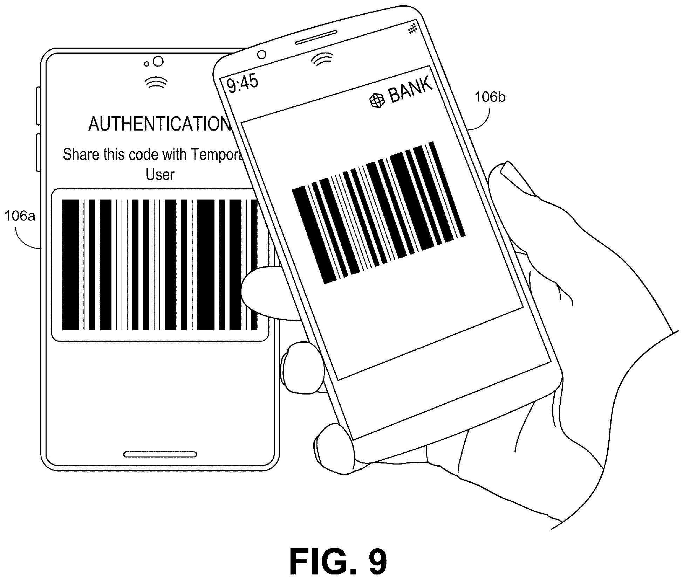

Next, FIG. 9 shows one example of a user interaction to facilitate authentication. As described above, a primary user holding a primary instrument 129 may wish to designate an additional temporary user for their primary instrument 129. In some examples, to start the journey of adding an additional temporary user, the primary user can use a mobile app on their client device 106a to request to add a temporary user to the primary account. As a result of such a request, a temporary instrument 119 can be generated and configured by the primary user to provide to the temporary user. Before issuing the temporary instrument 119 to the temporary user, a temporary instrument application 113 can first authenticate the temporary user.

Authentication can include sending an authentication request 133 and receiving an authentication response. There are numerous ways to accomplish authentication. In the example of FIG. 9, shown is a scenario where the temporary instrument application 113 has generated a barcode *(e.g.,* linear barcode, matrix code, *etc.)* as an authentication request 133. The temporary instrument application 113 can prompt the primary user to present the barcode to the temporary user to scan. Shown in FIG. 9, the temporary user can use their client device 106b to scan the barcode. In some examples, once the temporary user's client device 106b scans the barcode, the temporary user's client device 106b can automatically generate and share an authentication response. After authentication, the temporary instrument application 113 can issue the temporary instrument 119. In some examples, the configured temporary instrument 119 can be automatically and immediately sent to a digital wallet on the client device 106b of the temporary user.

Accordingly, with minimal user interactions, a temporary instrument 119 can be instantly provisioned and issued, providing limited access to the primary account. By allowing the primary user to impose provisioning rules and to assist in the authentication process, the time-consuming process of a traditional application for an additional account member is eliminated and the delay of approval and issuing is reduced to a matter of minutes.

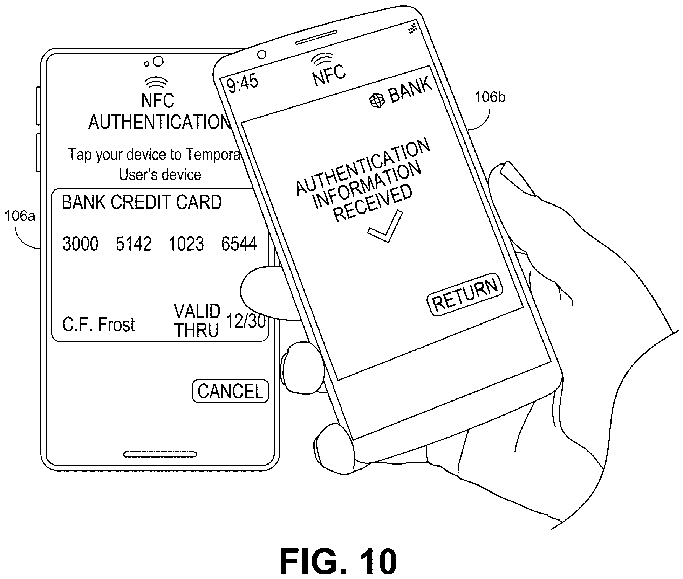

Similarly, FIG. 10 shows another example of a user interaction to facilitate authentication. As described above, a primary user holding a primary instrument 129 can use a mobile app on their client device 106a to request to add a temporary user to the primary account. As a result of such a request, a temporary instrument 119 can be generated and configured by the primary user to provide to the temporary user. However, before issuing the temporary instrument 119 to the temporary user, the temporary user can first be authenticated.

In the example of FIG. 10, shown is a scenario where the temporary instrument application 113 has generated a temporary short-range wireless NFC message as an authentication request 133. The temporary instrument application 113 can prompt the primary user to perform a device-to-device tap to share the short-range wireless message. Shown in FIG. 10, the primary user can use their client device 106a to "tap" the client device 106b of the temporary user to share the NFC message. In some examples, the temporary user's client device 106b can automatically generate and share an authentication response once the NFC tap has been completed. After authentication, the temporary instrument application 113 can issue the temporary instrument 119. In some examples, the configured temporary instrument 119 can be automatically and immediately sent to a digital wallet on the client device 106b of the temporary user.

In this example also, a temporary instrument 119 can be instantly provisioned and issued with minimal user interactions. By allowing the primary user to impose provisioning rules and to assist in the authentication process, the time-consuming process of a traditional application for an additional account member is eliminated and the delay of approval and issuing is reduced to a matter of minutes.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random access portion of the memory and run by the processor, source code that can be expressed in proper format such as object code that is capable of being loaded into a random access portion of the memory and executed by the processor, or source code that can be interpreted by another executable program to generate instructions in a random access portion of the memory to be executed by the processor. An executable program can be stored in any portion or component of the memory, including random access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random access memory (SRAM), dynamic random access memory (DRAM), or magnetic random access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowcharts show the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowcharts show a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowcharts can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices *(e.g.,* storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random access memory (RAM) including static random access memory (SRAM) and dynamic random access memory (DRAM), or magnetic random access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 103.

Disjunctive language such as the phrase "at least one of X, Y, or Z," unless specifically stated otherwise, is otherwise understood with the context as used in general to present that an item, term, etc., can be either X, Y, or Z, or any combination thereof *(e.g.,* X; Y; Z; X or Y; X or Z; Y or Z; X, Y, or Z; *etc.).* Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications can be made to the above-described embodiments without departing substantially from the spirit and principles of the disclosure. All such modifications and variations are intended to be included herein within the scope of this disclosure and protected by the following claims.

Moreover, various embodiments of the present disclosure are exemplified by the following clauses. It should be noted, however, that the following clauses do not represent the only embodiments of the present disclosure and are instead included solely for illustrative purposes.

Clause 1 - A system, comprising: a computing device comprising a processor and a memory; and machine-readable instructions stored in the memory that, when executed by the processor, cause the computing device to at least: receive a request to designate a temporary user for a primary instrument, the request identifying temporary user data; determine one or more provisioning rules for a temporary instrument based at least in part on the request, the temporary instrument being associated with the primary instrument; send an authentication request to the temporary user based at least in part on the temporary user data; receive an authentication response based at least in part on the authentication request; and issue the temporary instrument to the temporary user.

Clause 2 - The system of clause 1, wherein the machine-readable instructions which, when executed, cause the computing device to determine one or more provisioning rules, further cause the computing device to at least: send a request for one or more provisioning rules; and receive one or more provisioning rules based at least in part on the request.

Clause 3 - The system of clause 1 or 2, wherein the machine-readable instructions which, when executed, cause the computing device to send an authentication request, further cause the computing device to at least: generate a barcode representing the authentication request; and send a notification to a primary user associated with the primary instrument, the notification including at least the barcode.

Clause 4 - The system of clauses 1-3, wherein the machine-readable instructions which, when executed, cause the computing device to send an authentication request, further cause the computing device to at least: generate a temporary short-range wireless message; and send a prompt to conduct a device-to-device tap to share the temporary short-range wireless message.

Clause 5 - The system of clauses 1-4, wherein the machine-readable instructions which, when executed, cause the computing device to send an authentication request, further cause the computing device to at least: generate an authentication link; and send the authentication link to the temporary user.

Clause 6 - The system of clause 1-5, wherein the machine-readable instructions further cause the computing device to at least cross-check the temporary user data against a negative library.

Clause 7 - The system of clauses 1-6, wherein the machine-readable instructions further cause the computing device to at least: determine an expiration of the temporary instrument based at least in part on the one or more provisioning rules; and deactivate the temporary instrument upon the expiration.

Clause 8 - A method, comprising: receiving, by a computing device, a request to designate a temporary user for a primary instrument, the request identifying temporary user data; determining, by the computing device, one or more provisioning rules for a temporary instrument based at least in part on the request, the temporary instrument being associated with the primary instrument; sending, by the computing device, an authentication request to the temporary user based at least in part on the temporary user data; receiving, by the computing device, an authentication response based at least in part on the authentication request; and issuing, by the computing device, the temporary instrument to the temporary user.

Clause 9 - The method of clause 8, wherein determining one or more provisioning rules, further comprises: sending, by the computing device, a request for one or more provisioning rules; and receiving, by the computing device, one or more provisioning rules based at least in part on the request.

Clause 10 - The method of clause 8 or 9, wherein sending the authentication request further comprises: generating, by the computing device, a barcode representing the authentication request; and sending, by the computing device, a notification to a primary user associated with the primary instrument, the notification including at least the barcode.

Clause 1 - The method of clauses 10, wherein sending the authentication request further comprises: generating, by the computing device, a temporary short-range wireless message; and sending, by the computing device, a prompt to conduct a device-to-device tap to share the temporary short-range wireless message.

Clause 12 - The method of clauses 8-11, wherein sending the authentication request further comprises: generating, by the computing device, an authentication link; and sending, by the computing device the authentication link to the temporary user.

Clause 13 - The method of clauses 8-12, further comprising cross-checking, by the computing device, the temporary user data against a negative library.

Clause 14 - The method of clauses 8-13, further comprising: determining, by the computing device, an expiration of the temporary instrument based at least in part on the one or more provisioning rules; and deactivating, by the computing device, the temporary instrument upon the expiration.

Clause 15 - A system, comprising: a computing device comprising a processor and a memory; and machine-readable instructions stored in the memory that, when executed by the processor, cause the computing device to at least: configure a temporary instrument based at least in part on an input from a primary user, the temporary instrument being associated with a primary instrument of the primary user; authenticate a temporary user based at least in part on a configuration of the temporary instrument; and issue the temporary instrument to the temporary user based at least in part on a successful authentication.

Clause 16 - The system of clause 15, wherein the machine-readable instructions which, when executed by the processor, cause the computing device to configure the temporary instrument, further cause the computing device to at least: receive one or more provisioning rules from the primary user; generate the temporary instrument; and apply the one or more provisioning rules to the temporary instrument.

Clause 17 - The system of clause 15 or 16, wherein the machine-readable instructions which, when executed by the processor, cause the computing device to authenticate the temporary user, further cause the computing device to at least: send an authentication request to the temporary user; and receive an authentication response based at least in part on the authentication request.

Clause 18 - The system of clauses 15-17, wherein the machine-readable instructions further cause the computing device to at least: determine an expiration of the temporary instrument based at least in part on the configuration of the temporary instrument; and deactivate the temporary instrument upon the expiration.

Clause 19 - The system of clauses 15-18, wherein the input from the primary user comprises a request to designate a temporary user for the primary instrument.

Clause 20 - The system of clauses 15-19, wherein the machine-readable instructions further cause the computing device to at least cross-check the temporary user against a negative library.

## Claims

1. A system, comprising:
a computing device comprising a processor and a memory; and
machine-readable instructions stored in the memory that, when executed by the processor, cause the computing device to at least:
receive a request to designate a temporary user for a primary instrument, the request identifying temporary user data;
determine one or more provisioning rules for a temporary instrument based at least in part on the request, the temporary instrument being associated with the primary instrument;
send an authentication request to the temporary user based at least in part on the temporary user data;
receive an authentication response based at least in part on the authentication request; and
issue the temporary instrument to the temporary user.

2. The system of claim 1, wherein the machine-readable instructions which, when executed, cause the computing device to determine one or more provisioning rules, further cause the computing device to at least:
send a request for one or more provisioning rules; and
receive one or more provisioning rules based at least in part on the request.

3. The system of claim 1 or 2, wherein the machine-readable instructions which, when executed, cause the computing device to send an authentication request, further cause the computing device to at least:
generate a barcode representing the authentication request; and
send a notification to a primary user associated with the primary instrument, the notification including at least the barcode.

4. The system of claims 1-3, wherein the machine-readable instructions which, when executed, cause the computing device to send an authentication request, further cause the computing device to at least:
generate a temporary short-range wireless message; and
send a prompt to conduct a device-to-device tap to share the temporary short-range wireless message.

5. The system of claims 1-4, wherein the machine-readable instructions which, when executed, cause the computing device to send an authentication request, further cause the computing device to at least:
generate an authentication link; and
send the authentication link to the temporary user.

6. The system of claims 1-5, wherein the machine-readable instructions further cause the computing device to at least cross-check the temporary user data against a negative library.

7. The system of claims 1-6, wherein the machine-readable instructions further cause the computing device to at least:
determine an expiration of the temporary instrument based at least in part on the one or more provisioning rules; and
deactivate the temporary instrument upon the expiration.

8. A method, comprising:
receiving, by a computing device, a request to designate a temporary user for a primary instrument, the request identifying temporary user data;
determining, by the computing device, one or more provisioning rules for a temporary instrument based at least in part on the request, the temporary instrument being associated with the primary instrument;
sending, by the computing device, an authentication request to the temporary user based at least in part on the temporary user data;
receiving, by the computing device, an authentication response based at least in part on the authentication request; and
issuing, by the computing device, the temporary instrument to the temporary user.

9. The method of claim 8, wherein determining one or more provisioning rules, further comprises:
sending, by the computing device, a request for one or more provisioning rules; and
receiving, by the computing device, one or more provisioning rules based at least in part on the request.

10. The method of claim 8 or 9, wherein sending the authentication request further comprises:
generating, by the computing device, a barcode representing the authentication request; and
sending, by the computing device, a notification to a primary user associated with the primary instrument, the notification including at least the barcode.

11. The method of claims 8-10, wherein sending the authentication request further comprises:
generating, by the computing device, a temporary short-range wireless message; and
sending, by the computing device, a prompt to conduct a device-to-device tap to share the temporary short-range wireless message.

12. The method of claims 8-11, wherein sending the authentication request further comprises:
generating, by the computing device, an authentication link; and
sending, by the computing device the authentication link to the temporary user.

13. The method of claims 8-12, further comprising cross-checking, by the computing device, the temporary user data against a negative library.

14. The method of claims 8-13, further comprising:
determining, by the computing device, an expiration of the temporary instrument based at least in part on the one or more provisioning rules; and
deactivating, by the computing device, the temporary instrument upon the expiration.

15. A system, comprising:
a computing device comprising a processor and a memory; and
machine-readable instructions stored in the memory that, when executed by the processor, cause the computing device to at least:
configure a temporary instrument based at least in part on an input from a primary user, the temporary instrument being associated with a primary instrument of the primary user;
authenticate a temporary user based at least in part on a configuration of the temporary instrument; and
issue the temporary instrument to the temporary user based at least in part on a successful authentication.
